# EUROPEAN PATENT SPECIFICATION

(11) **EP 3 199 741 B1**
(45) Date of publication and mention of the grant of the patent: **30.10.2019**
(21) Application number: 17161054.6
(22) Date of filing: 21.08.2012
(51) Int. Cl.: E06B 7/32

(54) **SELECTIVE PET DOORS**
SELEKTIVE HAUSTIERTÜREN
PORTES SÉLECTIVES POUR ANIMAUX DE COMPAGNIE

(30) Priority: 12.09.2011 GB 201115718
(43) Date of publication of application: 02.08.2017
(62) Divisional of application: 12756544.8
(73) Proprietor: Sureflap Ltd, Cambridge Cambridgeshire CB4 8QP (GB)
(72) Inventor: Bank, Andrew Douglas, Cottenham, Cambridge CB24 8UD (GB); Hill, Nicholas Patrick Roland, Cottenham, Cambridge CB24 8TJ (GB)
(74) Representative: Ford, Esther Mary

(56) References cited:
- WO-A2-2009/090426
- GB-A- 2 376 977
- GB-A- 2 393 245
- GB-A- 2 431 431
- US-A1- 2008 072 843

## Description

### FIELD OF INVENTION

This invention relates to a selective pet door with a safety mode, and to a method of programming a selective pet door installed in a building.

The application discloses pet doors for allowing selective control of entry/exit to and from a building, in particular for multiple animals. We also describe related methods of programming a pet door, pet doors with multiple operational modes including a safety mode, and pet doors with a robust anti-intruder function.

### BACKGROUND TO THE INVENTION

In EP2080172 Hill describes an RFID pet door that operates on an RFID tag that is either embedded under the skin of the pet or attached to the animal, such as on a collar. The device shown in this patent implements selective entry. Here the owner can go through a process where the pet door learns the ID codes that correspond to their animals and the unit will subsequently open up only for these animals, allowing them access to the home. This invention provides a useful function of a safe home environment for animals that are allowed to go outside, preventing intruder animals from entering their home.

In EP2080172 the arrangement of the antenna on one side of the door, closer to the outside of the house gives the benefit of putting the sensitive RFID reader closer to the position of the animal's RFID tag, particularly if it is a sub-dermal transponder.

While the system described by Hill also allows for some additional control of the access inside or outside the house with an additional manual lock or additional electronic locks or locking modes, it does not allow select pets from a group of pets access to the outside, while denying access to one or more other pets.

GB2376977 A (Duerden; 31.12.02) relates to a selective entry pet door controlled by sub-dermal identification device. In more detail, GB2376977 A describes that identification codes of animals permitted to pass through the pet door are stored in an electronic memory; the door will automatically unlock if the code read from an animal's identification device is matched with an entry in the memory. Further disclosed are a lock solenoid, a receiver coil and a user control panel.

We will therefore describe improved pet doors.

### SUMMARY OF THE INVENTION

According to a first aspect of the present invention, there is provided a selective pet door with a safety mode, as defined in claim 1.

According to a second aspect of the present invention, there is provided a method of programming a selective pet door installed in a building, as defined by claim 15. Preferred embodiments are defined by the appended dependent claims.

### BRIEF DESCRIPTION OF THE DRAWINGS

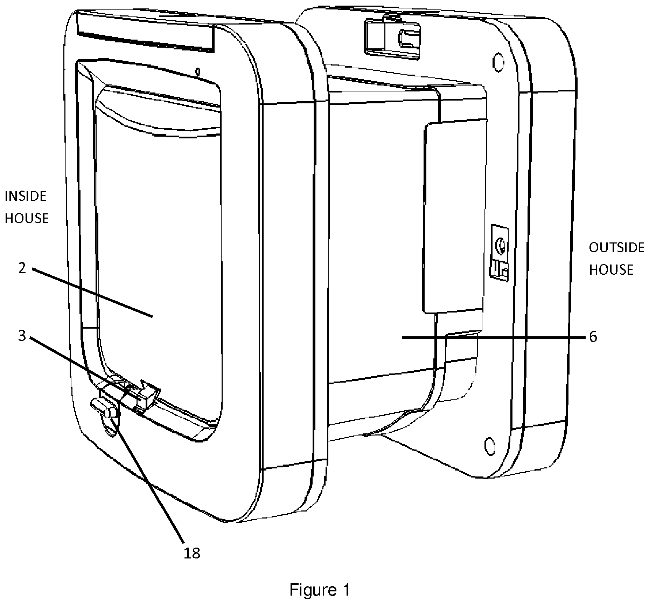

Figure 1 shows an embodiment of a pet door.

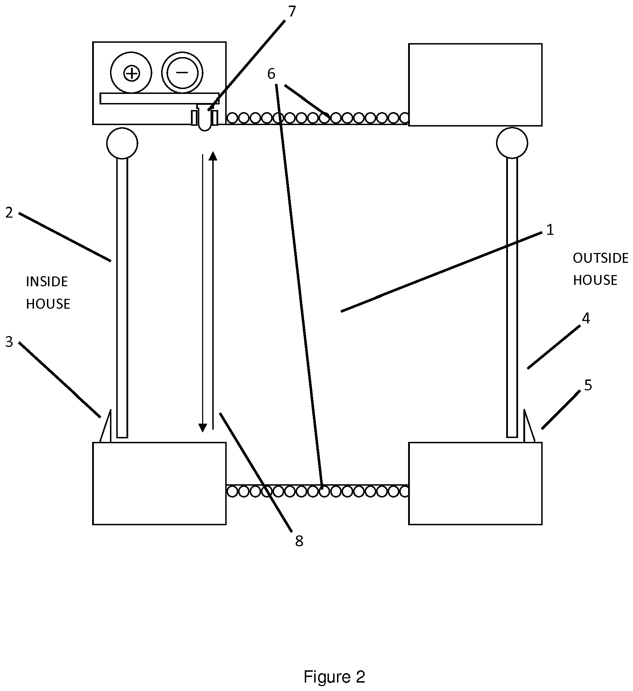

Figure 2 shows a side view of an embodiment of a pet door.

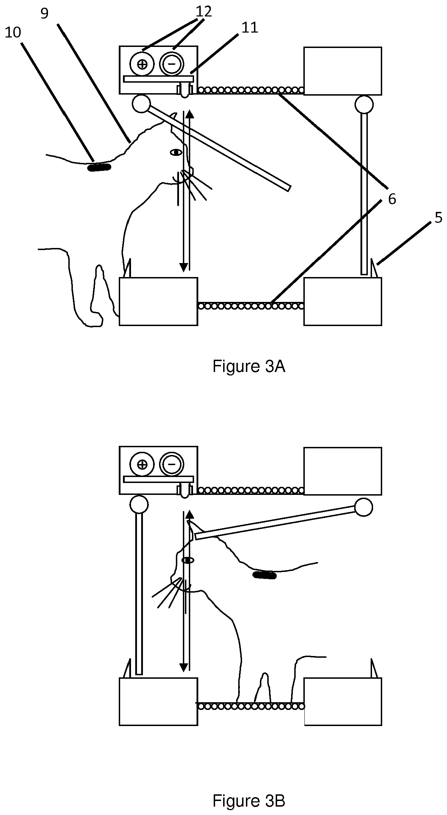

Figure 3 shows an illustration of a cat using the pet door of figure 2. Figure 3A shows the cat approaching from the inside of the house. Figure 3B shows the cat approaching from the outside of the house.

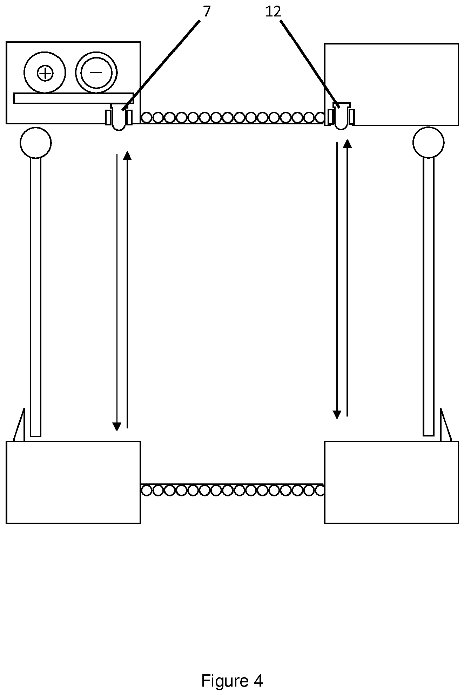

Figure 4 shows an embodiment of a pet door with two optical proximity detectors.

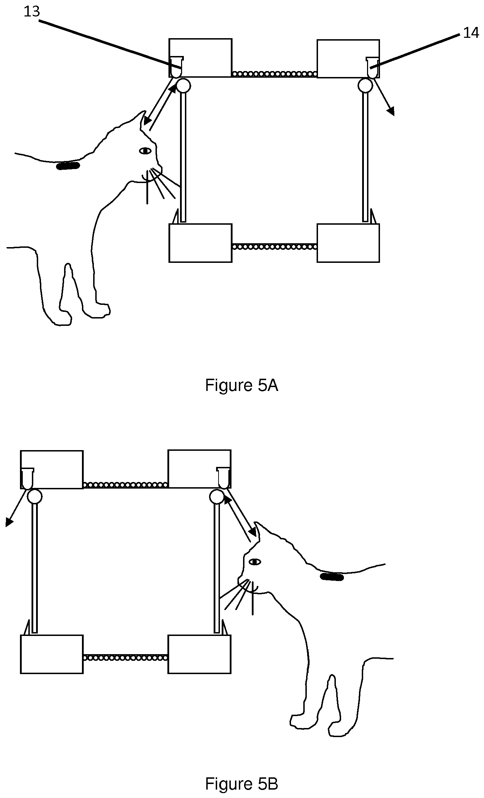

Figure 5 shows an embodiment of a pet door with two optical proximity detectors that detect a reflection from a cat.

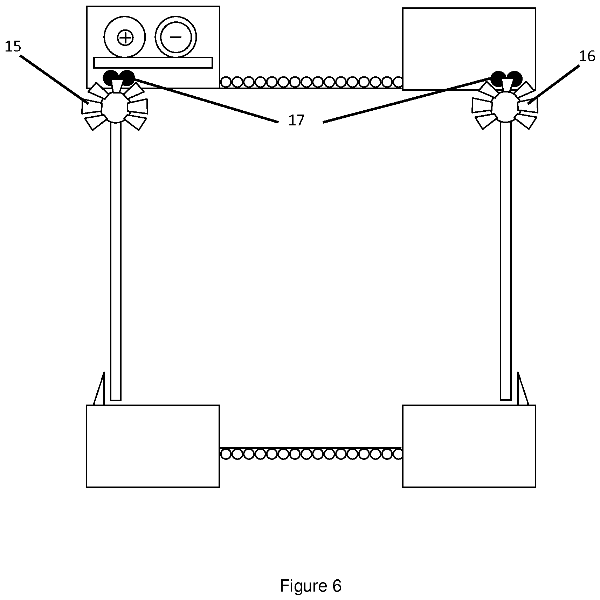

Figure 6 shows an embodiment of a pet door with two door rotation sensors.

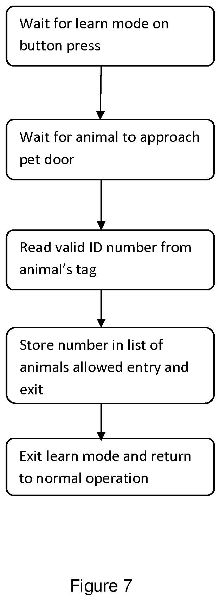

Figure 7 shows a flow chart for a single learn mode.

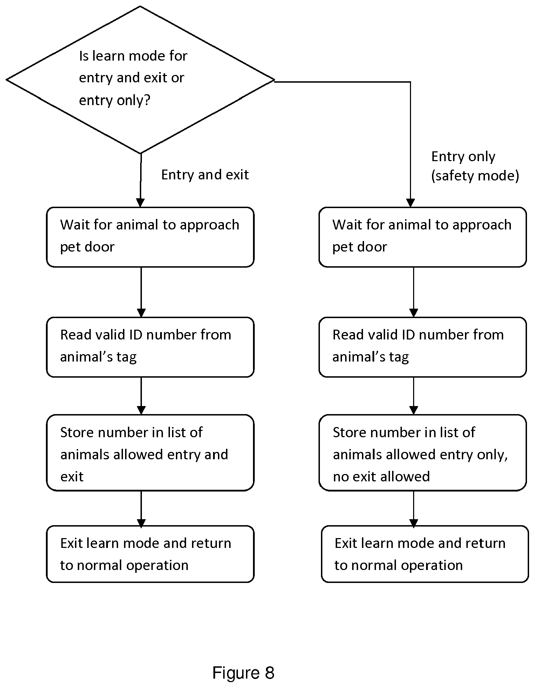

Figure 8 shows a flow chart for a first learn mode of entry and exit, and a second learn mode of entry only.

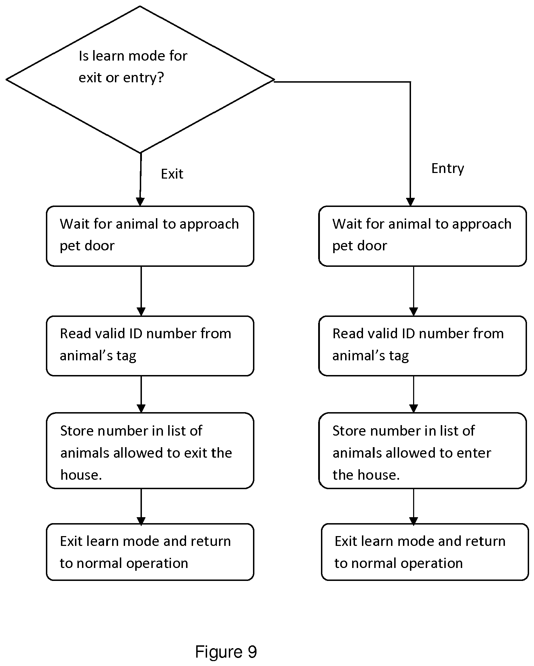

Figure 9 shows a flow chart for a first learn mode of entry allowed, and a second learn mode of exit allowed.

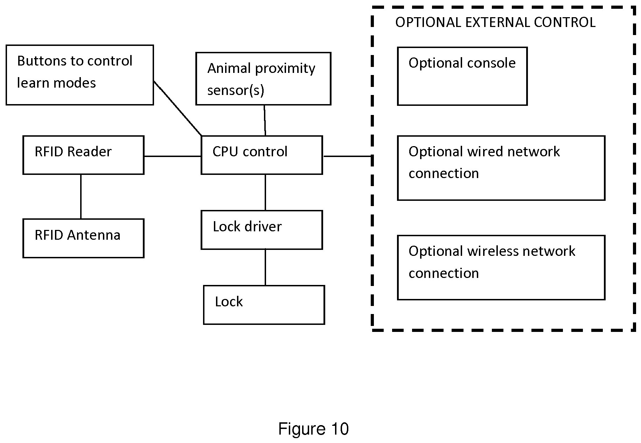

Figure 10 shows a block diagram of the different electronic elements of an embodiment of a pet door.

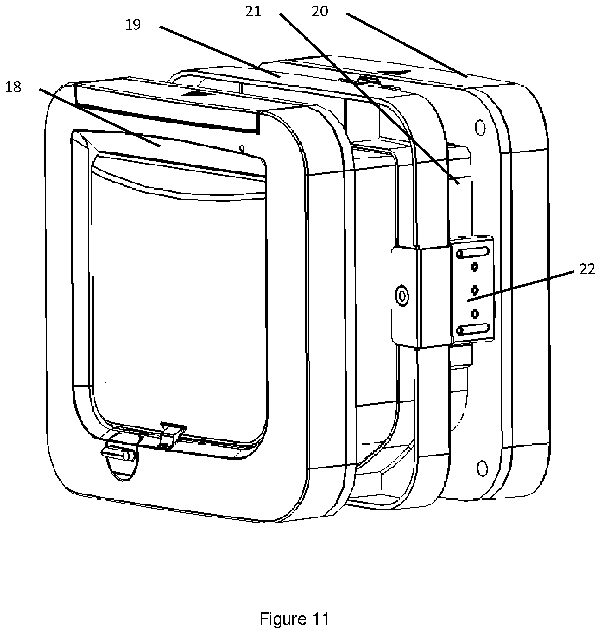

Figure 11 illustrates a mounting method for a pet door with mounting brackets between first and second assemblies.

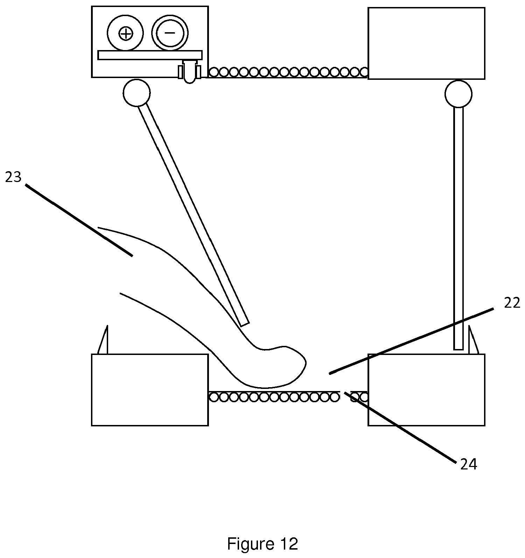

Figure 12 shows an embodiment of a pet door with a step down feature between the two doors and a drain hole.

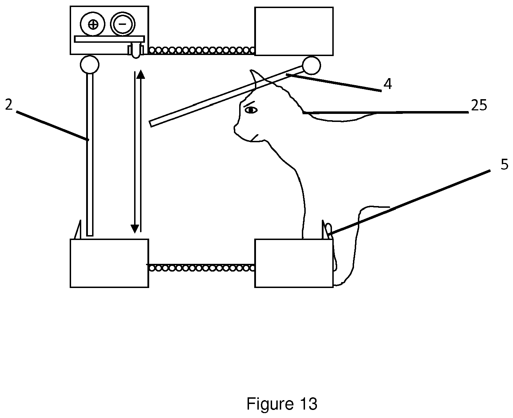

Figure 13 shows an intruder animal attempting to enter the house.

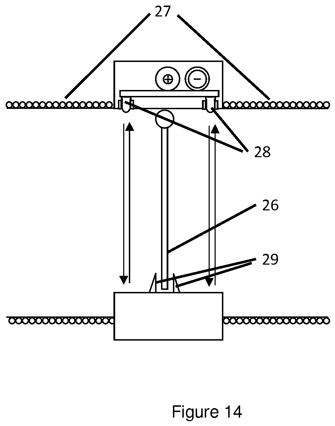

Figure 14 shows a selective pet door with a single door and multiple RFID antennae.

### DETAILED DESCRIPTION OF EMBODIMENTS

We firstly describe an arrangement that is a selective pet door for allowing selective control of entry/exit to/from a building, the pet door comprising: a tunnel portion defining a tunnel for entry/exit of a pet; first and second moveable flaps, one towards either end of said tunnel; and first and second controllable locks each for a respective said flap, wherein said first controllable lock is controllable to selectively enable and inhibit opening of said first flap, and wherein said second controllable lock is controllable to selectively enable and inhibit opening of said second flap.

Such pet doors may be particularly suitable for implementing selective entry control techniques. Thus the pet door may also include an electronic control system to control the first and second locks and an RFID (or other) tag reader to read an RFID (or other) tag on a pet, preferrably an implanted microchip tag, to control the pet door in response to the tag code identification. More particularly preferred, the electronic control system is configurable by a user to provide selective entry/exit control for a plurality of tagged pets (having different respective tag codes), enabling the user to define, for each pet, an allowed direction of movement of the pet through the pet door.

Thus the system may include (non-volatile) storage, for example Flash memory or battery-backed-up memory storing data defining, for each animal, one or more allowed directions of movement of the animal through the pet door. In one approach a list of permitted and/or forbidden movements (one may be inferred from the other) is stored for each animal; in another approach a list of animals, more particularly animal identification codes, is provided for each allowed direction of movement or combination of directions - for example 'allows entry', 'allows exit'.

Further regarding the pet door, each of the locks may allow opening of the respective flap inwards, towards the tunnel and is controllable to selectively enable and disable or inhibit opening of the flap outwards away from the tunnel. To achieve this a flap may be hinged at the top, the lock providing a controllable stop on an outer surface of the pet door. Thus, broadly speaking, an animal may enter the tunnel between the flaps, but may not exit the flap on the far side without the respective lock being controlled to enable the animal to exit the pet door.

A preferred implementation of the pet door provides a safety mode which is implemented by providing two selectable use modes for the pet flap, an entry and exit use mode, and an entry-only use mode. In this way even where a pet is not permitted to leave through the pet door, if the pet does find itself outside it can nonetheless return. This is useful for example, where a kitten might follow an older cat through the pet door as the older cat leaves - the safety mode enables the kitten to return safely.

The pet door may include at least one proximity detector to detect attempted entry of a pet into or through the pet door. This may be employed for a range of functions, for example to turn the RFID reader on and/or to sense a direction of travel of an animal through the pet door. It will be recognised, however, that it is not essential to sense the direction of travel to provide a selective entry/exit function. Nonetheless advantageously two proximity detectors may be employed, for example one towards either end of the tunnel, and the electronic control system may then use signals from these detectors to determine a direction of movement of a pet through the pet door, to control the controllable locks in response. In this way, for example, a lock on the entry or exit side may be selectively activated as indicated by the direction of travel of the animal sensed by the proximity detectors, again to save power.

A proximity detector may, for example, comprise an optical detector, more particularly at one side of the tunnel a system to generate and sense a beam of light reflected from an opposite side of the tunnel. Additionally or alternatively a proximity detector may comprise a flap rotation sensor to sense rotation of a flap about a hinge. In one implementation, rather than providing one proximity detector at or towards each end of the tunnel, a pair of proximity detectors is provided at one end of the tunnel to perform the direction sensing. More particularly one of these proximity detectors may be, for example, an optical sensor and the other a sensor sensing rotation of a flap. In this way both sensors can be located at one end of a tunnel - the interior end when the cat flap is mounted on a door or wall, thus protecting the associated electronics from the environment of the part of the pet door on the outside of the building.

Where a direction of motion of a pet through the pet door is sensed, the electronic control system may store two sets of permission data defining allowed directions of movement of a pet. This permission data may comprise a first set of data for one or more identified pets defining a first set of allowed/forbidden directions of movement of an identified pet, and a second set of permission data for one or more identified pets defining a second set of allowed/forbidden directions of movement of the identified pet or pets. The direction of movement sensed by the proximity detectors may then be employed by the electronic control system to select one of these sets of permission data for use in controlling movement of an identified pet through the pet door.

The pet door electronic system may have a plurality of learn modes to learn and store permission data for a pet identified by the RFID (or other tag) reader. This permission data may define, for each of two directions of movement through the pet door, whether an identified pet is permitted to pass through the pet door. More particularly the learn modes may comprise an 'entry and exit' learn mode, where a pet may pass in both directions through the pet door, and an 'entry only' learn mode, in which the pet is committed to pass in only a single direction thourgh the pet door. Alternatively, however, these modes may be programmed via user interface rather than learnt. Thus additionally or alternatively the electronic control system may be programmable to define, for each of a plurality of differently identified pets, permitted modes of use/motion through the pet door.

The mechanical configuration of the pet door makes the system particularly suitable for an RFID reader as, because a pet enters the tunnel before the door on the far side is controlled, there is a convenient space where the pet is positioned for tag reading. Thus the pet door may comprise a loop antenna for the RFID reader encompassing the tunnel. With other RFID reader arrangements an antenna coil or other antenna arrangement may be located in, on or adjacent the tunnel defined by the tunnel position of the pet door, for a similar purpose.

The tunnel position of the pet door may include a formation with a straight or concave surface defining a step down to a region of increased floor depth of the tunnel between the moveable flaps. This step formation is located such that a moveable flap moves or swings over the downwards step. In this way if an animal attempts to withdraw a paw from behind a flap which has been pushed inwards into the tunnel, rather than the downwards swinging motion of the flap trapping the paw against the floor of the tunnel with increasing force as the paw is withdrawn, the action of withdrawing a paw tends to push the flap inwards, maintaining an aperture through which the paw may be withdrawn without injury. Preferably this region of increased floor depth includes one or more drainage holes for any water which may collect.

In one convenience to manufacture implementation the pet door comprises first and second door parts each bearing a moveable flap. One of these door parts includes the tunnel position and mounts an external frame. This external frame in turn mounts an adjustable length attachment or bracket, attaching the external frame, and hence the first door part, to the second door part. In this way substantially the same moulding may be employed for the first and second door parts, whether one door part is used on its own or in combination with a second door part. This therefore facilitates manufacture of a range of pet doors with either one or two moveable flaps.

In a related aspect, embodiments of the invention provides a method of programming a selective pet door installed in a building, for selective control of pet entry and exit to and from the building, the selective pet door comprising a tunnel including a moveable flap, in embodiments with a moveable flap at either end, and one or more controllable locks for the or each flap to inhibit (outward) opening of the flap and egress from the tunnel by a pet, the pet door further comprising an a tag reader to read a tag on a pet identifying the pet and to control said one or more locks in response to control movement of a pet though the pet door, the method comprising: providing a plurality of learn modes for said pet door, said learn modes defining whether an identified pet is permitted to exit and enter the building; providing one or more user controls to enable a user to activate a selected said learn mode; activating a selected said learn mode in response to a user; and using a tagged pet to program the pet door in said selected learn mode.

In some preferred embodiments the learn modes comprise an entry and exit mode, and an entry-only mode, as previously described.

Thus in a related aspect an embodiment of the invention provides a selective pet door for selective control of pet entry into and exit from a building, the selective pet door comprising a tunnel with a moveable flap at either end, and a controllable lock for each flap to inhibit outward opening of the flap and egress from the tunnel by a pet, the pet door further comprising a tag reader to read a tag on a pet identifying the pet and to control said locks in response, to control movement of a pet though the pet door, the selective pet door further comprising: means for providing a plurality of learn modes for said pet door, said learn modes for defining whether an identified pet is permitted to exit and enter the building; providing one or more user controls to enable a user to activate a selected said learn mode; and a system for storing entry and exit control data programmed using a tagged pet when the pet door is in a selected said learn mode.

In a further related aspect, embodiments of the invention provide a selective pet door with a safety mode, wherein the pet door is configurable to allow a pet into but not out of a building, the pet door comprising at least one moveable flap, a controllable lock for the flap, and a tag reader to read a tag on a pet identifying the pet and to control said controllable lock in response, to control movement of a pet through the pet door; wherein said at least one controllable lock and said at least one moveable flap are, in combination, controllable to restrict movement of a pet through said pet door in each of two opposite directions, and wherein the pet door further comprises: a data store configured to store permission data defining, for each of a plurality of identified pets, an allowed use mode of said pet flap; and an electronic control system coupled to said tag reader and to said at least one controllable lock to control movement of an identified pet through said pet door in response to the allowed use mode of the pet door for the identified pet defined by said stored permission data; and wherein said use modes of said pet door include at least an entry/exit mode in which an identified pet is able to both enter and exit the building, and a safety mode in which an identified pet only is able to enter the building.

In embodiments the electronic control system is programmable to define an allowed use mode for each identifiable pet. In embodiments programming of the pet door may be achieved by activating a programming mode, for example by means of a user control, and then bringing the tagged pet up to the pet door, optionally from one or the other side of the door.

In embodiments the pet door has a tunnel portion defining a tunnel for entry/exit of the pet and a loop antenna for the tag reader encompasses the tunnel. More specifically, in some preferred embodiments the loop antenna is split such that portions of the loop antenna are disposed to either side of the moveable flap. In such an arrangement there are advantages in connecting the antennas together, preferably in series with one another, so that they inductive couple together, driving and receiving with them jointly. This is explained in more detail later.

In embodiments the more turns are provided on one side of the flap than the other. More specifically, in embodiments the tunnel is asymmetrical, extending further to one side of the flap than the other, the long side of the tunnel extending through the wall in which the door is mounted, the flap being located on the interior side of the wall (where the tunnel may simply be a stub). With such an arrangement, an animal may partially enter the tunnel where the tunnel is long, facilitating reading the tag, but on the shorter side the tag must effectively be read at a greater range, and thus providing a larger number of turns on this side can be helpful.

Features of the previously described arrangement may also be employed with this safety-mode door.

A still further advantage of a pet door as described above is that the pet door can be arranged so that one inwardly hinged flap obstructs and interferes with the inward hinging of the other flap (where the controllable lock for the other flap is not activated). This can therefore be employed to provide a particularly secure entry/exit control mechanism and, in particular, this technique can be employed to provide a pet door which is robust against a determined effort at impermissible entry by an untagged intruder animal such as a raccoon.

Thus a further embodiment provides an anti-intruder pet flap, the pet flap comprising a tunnel portion defining a tunnel for a pet, the tunnel portion bearing a pair of flaps, one towards either end of the tunnel, each flap being hinged at the top, and wherein at least one said flap is provided with a controllable lock to, when operated, inhibit the flap from hinging outwards away from said tunnel, wherein said flaps are mounted to enable a flap to swing inwards towards said tunnel, and wherein, when a first of said flaps is in an inwardly swung position said first flap inhibits the second of said flaps from swinging inwards. In some embodiments each flap may be provided with a controllable lock.

A further embodiment provides a selective pet door with paw-protect, the pet door allowing selective control of entry/exit to/from a building, the pet door comprising: a tunnel portion defining a tunnel for entry/exit of a pet; at least one moveable flap mounted in or adjacent an end of said tunnel; and wherein said tunnel portion includes a formation with a straight or concave surface defining a step down to a region of increased floor depth of said tunnel adjacent said at least one moveable flap, and wherein said moveable flap swings over said downwards step.

Astill further embodiment may provide a selective pet door allowing selective control of pet entry/exit to/from a building, the pet door comprising: a tunnel portion defining a tunnel for entry/exit of a pet; at least one moveable flap within said tunnel; a controllable lock for the flap; and a tag reader to read a tag on a pet identifying the pet and to control said controllable lock to control movement of a pet through the pet door; and a loop antenna for said tag reader, wherein said loop antenna encompasses said tunnel; wherein said loop antenna is split such that a first and second portions of said loop antenna are disposed to either side of said moveable flap.

The first and second portions of the loop antenna may be connected in series with one another and couple together inductively.

Broadly speaking the following will describe a selective exit pet door comprising an opening through which an animal is either allowed access or not. An inner door is situated across the opening towards the inside of the house with a lock that can selectively stop the door from opening inwards. This lock is controlled electronically, either allowing access to the inside or preventing access.

An outer door is situated across the opening towards the outside of the house with a lock that can selectively stop the door from opening outwards. This lock is controlled electronically, either allowing access to the outside or preventing access.

Such a pet door may recognise an animal's ID code and selectively either let them access to the outside, while still implementing the selective entry function, or bar them from accessing the outside. Uses for a pet door with this function include when an owner has a number of pets, some of which are allowed access to the outside and allowed to enter the house is not the same as the list of animals to exit the house, in particular used as a safety feature to avoid animals being locked out. These techniques may be used in combination with direction of approach information of the pet to determine to which list to compare the read ID code. We have also described a pet door with a single learn mode for one list of animals allowed to enter and exit the house; two learn modes to selectively program animals to enter and exit and animals to enter only; and two learn modes for animals to enter the house and those to exit the house. Additionally or alternatively animal entry/exit control data may be via a console, for example via a keypad or web page. We have also described a pet door with control over one or more flaps of the door via the internet, for example via a wireless connection.

No doubt many other effective alternatives will occur to the skilled person. It will be understood that the invention is not limited to the described embodiments and encompasses modifications apparent to those skilled in the art lying within the scope of the claims appended hereto.

## Claims

1. A selective pet door with a safety mode, wherein the pet door is configurable to allow a pet (9) into but not out of a building, the pet door comprising at least one moveable flap (2, 4, 26), a controllable lock (3, 5, 29) for the flap (2, 4, 26), and a tag reader (11) to read a tag (10) on a pet (9) identifying the pet and to control said controllable lock (3, 5, 29) in response, to control movement of a pet (9) through the pet door;
wherein said at least one controllable lock (3, 5, 29) and said at least one moveable flap (2, 4, 26) are, in combination, controllable to restrict movement of a pet (9) through said pet door in each of two opposite directions, and wherein the pet door further comprises:
a data store configured to store permission data defining, for each of a plurality of identified pets (9), an allowed use mode of said pet flap; and
an electronic control system coupled to said tag reader (11) and to said at least one controllable lock (3, 5, 29) to control movement of an identified pet (9) through said pet door in response to the allowed use mode of the pet door for the identified pet defined by said stored permission data; and
wherein said use modes of said pet door include at least an entry/exit mode in which an identified pet (9) is able to both enter and exit the building, and a safety mode in which an identified pet (9) only is able to enter the building.

2. A selective pet door a claimed in claim 1 wherein said electronic control system is programmable to define a said allowed use mode for each said identifiable pet (9).

3. A selective pet door as claimed in claim 2 wherein said electronic control system is programmable using said identifiable pet (9).

4. A selective pet door as claimed in any one of claims 1 to 3 further comprising a loop antenna (6, 27) for said tag reader (11), and a tunnel portion defining a tunnel for entry/exit of said pet (9), wherein said loop antenna (6, 27) encompasses said tunnel, wherein said moveable flap (2, 4, 26) is located within said tunnel, and wherein said loop antenna (6, 27) is split such that a first and second portions of said loop antenna (6, 27) are disposed to either side of said moveable flap (2, 4, 26).

5. A selective pet door as claimed in claim 4 wherein said flap (2, 4, 26) is located asymmetrically within said tunnel such that the tunnel extends further to one side of said flap (2, 4, 26) than the other, and wherein a first portion of said loop antenna (6, 27) on a short side of said tunnel has more turns than a second portion of said loop antenna (6, 27) on a longer side of said tunnel.

6. A selective pet door as claimed in claim 4 or 5 wherein said first and second portions of said loop antenna are electrically connected together, in particular connected in series with one another.

7. A selective pet door as claimed in any preceding claim comprising two said controllable locks (3, 5, 29), one to either side of said at least one moveable flap (2, 4, 26).

8. A selective pet door as claimed in any preceding claim further comprising at least one proximity detector (7, 12, 13, 14, 15, 16, 17, 28) to detect attempted entry of a pet (9) into said pet door, and wherein said electronic control system is responsive to a signal from said proximity detector to control said pet door,
the selective pet door preferably comprising a tunnel portion defining a tunnel for entry/exit of said pet (9) and two said proximity detectors (7, 12, 13, 14, 15, 16, 17, 28), one towards either end of said tunnel; and wherein said electronic control system is responsive to a signal from said proximity detectors (7, 12, 13, 14, 15, 16, 17, 28) to determine a direction movement of a pet (9) through the pet door, and to control said at least one controllable lock (3, 5, 29) responsive to said determined direction of movement,
preferably wherein said electronic control system stores two sets of permission data defining allowed directions of movement of a pet through said pet door, a first set of permission data comprising permission data for one or more identified pets (9) and defining a first set of one or more allowed/forbidden directions of movement of the identified pet (9) through said pet door, and a second set of permission data comprising permission data for one or more identified pets (9) and defining a second set of one or more allowed/forbidden directions of movement of the identified pet (9) through said pet door, and wherein said electronic control system is configured to select one of said sets of permission data for use in controlling movement of an identified pet (9) through said pet door responsive to said determined direction of movement.

9. A selective pet door as claimed in claim 8 comprising a tunnel portion defining a tunnel for entry/exit of said pet (9), wherein a said proximity detector (7, 12, 28) comprises, at one side of said tunnel, a system to generate and sense a beam of light (8) reflected on an opposite side of the tunnel.

10. A selective pet door as claimed in any one of claims 1 to 9 wherein said electronic control system has a plurality of learn modes to learn, and store in memory, permission data for a pet (9) identified by said RFID reader (11), wherein said permission data defines, for each of two directions of movement through the pet door, whether an identified pet (9) is permitted to pass through the pet door.

11. A selective pet door as claimed in claim 10 wherein said learn modes comprise an 'entry and exit' learn mode in which the pet door learns and stores permission data defining whether an identified pet (9) is permitted to pass in each of two opposite directions of movement through said pet door, and an 'entry only' learn mode in which the pet door learns and stores permission data defining whether an identified pet (9) is permitted to pass in just a single direction of movement though said pet door.

12. A selective pet door as claimed in any one of claims 1 to 11 wherein said electronic control system is programmable to define, for each of a plurality of differently identified pets (9), and for each of two directions of movement through the pet door, whether an identified pet (9) is permitted to pass through the pet door.

13. A selective pet door as claimed in any preceding claim comprising a tunnel portion defining a tunnel for entry/exit of said pet (9), wherein said tunnel portion includes a formation with a straight or concave surface defining a step down (22) to a region of increased floor depth of said tunnel adjacent said at least one moveable flap (2, 4, 26), and wherein said moveable flap (2, 4, 26) swings over said downwards step (22).

14. A selective pet door as claimed in any preceding claim comprising a tunnel portion defining a tunnel for entry/exit of said pet (9), first and second moveable flaps (2, 4, 26), one towards either end of said tunnel, and first and second controllable locks (3, 5, 29) each for a respective said flap (2, 4, 26), wherein said first controllable lock (3, 5, 29) is controllable to selectively enable and inhibit opening of said first flap (2, 4, 26), and wherein said second controllable lock (3, 5, 29) is controllable to selectively enable and inhibit opening of said second flap (2, 4, 26).

15. A method of programming a selective pet door installed in a building, for selective control of pet entry and exit to and from the building, the selective pet door comprising a tunnel including a moveable flap or a moveable flap at either end, and one or more controllable locks (3, 5, 29) for the or each flap to inhibit opening of the flap and egress from the tunnel by a pet (9), the pet door further comprising a tag reader (11) to read a tag (10) on a pet (9) identifying the pet (9) and to control said one or more locks (3, 5, 29) in response to control movement of a pet (9) though the pet door, the method comprising:
providing a plurality of learn modes for said pet door, said learn modes defining whether an identified pet (9) is permitted to exit and enter the building;
providing one or more user controls to enable a user to activate a selected said learn mode;
activating a selected said learn mode in response to a user; and
using a tagged pet (9) to program the pet door in said selected learn mode,
wherein said learn modes comprise an entry and exit mode in which the pet door is able to learn that an identified pet (9) is able to both enter and exit the building, and an entry only mode in which the pet door is able to learn that an identified pet (9) is able only to enter the building.

## Patentansprüche

1. Selektive Haustiertür mit einem Sicherheitsmodus, wobei die Haustiertür konfigurierbar ist, um einem Haustier (9) zu erlauben, sich in aber nicht aus einem Gebäude zu bewegen, wobei die Haustiertür mindestens eine bewegliche Klappe (2, 4, 26), ein steuerbares Schloss (3, 5, 29) für die Klappe (2, 4, 26) und ein Kennungslesegerät (11) umfasst, um eine Kennung (10) an einem Haustier (9) zu lesen, die das Haustier identifiziert, und um als Reaktion das steuerbare Schloss (3, 5, 29) zu steuern, um eine Bewegung eines Haustiers (9) durch die Haustiertür zu steuern;
wobei das mindestens eine steuerbare Schloss (3, 5, 29) und die mindestens eine bewegliche Klappe (2, 4, 26) in Kombination steuerbar sind, um eine Bewegung eines Haustiers (9) durch die Haustiertür in jeweils zwei entgegengesetzten Richtungen zu begrenzen, und wobei die Haustiertür des Weiteren umfasst:
einen Datenspeicher, der konfiguriert wird, Berechtigungsdaten zu speichern, die für jedes aus einer Vielzahl von identifizierten Haustieren (9) einen erlaubten Benutzungsmodus der Haustierklappe definieren; und
ein elektronisches Steuerungssystem, das mit dem Kennungslesegerät (11) und dem mindestens einen steuerbaren Schloss (3, 5, 29) verbunden wird, um als Reaktion auf den erlaubten Benutzungsmodus der Haustiertür für das identifizierte Haustier, das durch die gespeicherten Berechtigungsdaten definiert wird, eine Bewegung eines identifizierten Haustiers (9) durch die Haustiertür zu steuern; und
wobei die Benutzungsmodi der Haustiertür mindestens einen Eintritts-/Austrittsmodus, in dem ein identifiziertes Haustier (9) fähig ist, in das Gebäude sowohl hineinzukommen als auch herauszukommen, und einen Sicherheitsmodus aufweisen, in dem ein identifiziertes Haustier (9) nur fähig ist, in das Gebäude hineinzukommen.

2. Selektive Haustiertür nach Anspruch 1, wobei das elektronische Steuerungssystem programmierbar ist, um den erlaubten Benutzungsmodus für jedes der identifizierbaren Haustiere (9) zu definieren.

3. Selektive Haustiertür nach Anspruch 2, wobei das elektronische Steuerungssystem durch Verwenden des identifizierbaren Haustiers (9) programmierbar ist.

4. Selektive Haustiertür nach einem der Ansprüche 1 bis 3, die des Weiteren eine Rahmenantenne (6, 27) für das Kennungslesegerät (11) und einen Tunnelabschnitt umfasst, der einen Tunnel für den Eintritt/Austritt des Haustiers (9) definiert, wobei die Rahmenantenne (6, 27) den Tunnel umgibt, wobei die bewegliche Klappe (2, 4, 26) innerhalb des Tunnels angeordnet wird und wobei die Rahmenantenne (6, 27) so aufgeteilt wird, dass ein erster und zweiter Abschnitt der Rahmenantenne (6, 27) auf beiden Seiten der beweglichen Klappe (2, 4, 26) angeordnet wird.

5. Selektive Haustiertür nach Anspruch 4, wobei die Klappe (2, 4, 26) innerhalb des Tunnels so asymmetrisch angeordnet wird, dass sich der Tunnel zu einer Seite der Klappe (2, 4, 26) weiter erstreckt als zu der anderen, und wobei ein erster Abschnitt der Rahmenantenne (6, 27) auf einer kurzen Seite des Tunnels mehr Windungen als ein zweiter Abschnitt der Rahmenantenne (6, 27) auf einer längeren Seite des Tunnels aufweist.

6. Selektive Haustiertür nach Anspruch 4 oder 5, wobei der erste und zweite Abschnitt der Rahmenantenne elektrisch zusammen verbunden werden, insbesondere miteinander in Reihe verbunden werden.

7. Selektive Haustiertür nach einem vorhergehenden Anspruch, die zwei der steuerbaren Schlösser (3, 5, 29) umfasst, eines auf beiden Seiten der mindestens einen beweglichen Klappe (2, 4, 26).

8. Selektive Haustiertür nach einem vorhergehenden Anspruch, die des Weiteren mindestens einen Näherungsfühler (7, 12, 13, 14, 15, 16, 17, 28) umfasst, um einen versuchten Eintritt eines Haustiers (9) in die Haustiertür zu erkennen, und wobei das elektronische Steuerungssystem auf ein Signal von dem Näherungsfühler reagiert, um die Haustiertür zu steuern,
wobei die selektive Haustiertür vorzugsweise einen Tunnelabschnitt umfasst, der einen Tunnel für einen Eintritt/Austritt des Haustiers (9) und zwei der Näherungsfühler (7, 12, 13, 14, 15, 16, 17, 28) definiert, einen zu beiden Enden des Tunnels; und wobei das elektronische Steuerungssystem auf ein Signal von den Näherungsfühlern (7, 12, 13, 14, 15, 16, 17, 28) reagiert, um eine Bewegungsrichtung eines Haustiers (9) durch die Haustiertür zu ermitteln und das mindestens eine steuerbare Schloss (3, 5, 29) zu steuern, das auf die ermittelte Bewegungsrichtung reagiert,
wobei vorzugsweise das elektronische Steuerungssystem zwei Sätze von Berechtigungsdaten speichert, die erlaubte Bewegungsrichtungen eines Haustiers durch die Haustiertür definieren, wobei ein erster Satz von Berechtigungsdaten die Berechtigungsdaten für ein oder mehrere identifizierte Haustiere (9) umfasst und einen ersten Satz von einer oder mehreren erlaubten/verbotenen Bewegungsrichtungen des identifizierten Haustiers (9) durch die Haustiertür definiert, und ein zweiter Satz von Berechtigungsdaten die Berechtigungsdaten für ein oder mehrere identifizierte Haustiere (9) umfasst und einen zweiten Satz von einer oder mehreren erlaubten/verbotenen Bewegungsrichtungen des identifizierten Haustiers (9) durch die Haustiertür definiert, und wobei das elektronische Steuerungssystem konfiguriert wird, einen der Sätze von Berechtigungsdaten zur Verwendung beim Steuern einer Bewegung eines identifizierten Haustiers (9) durch die Haustiertür als Reaktion auf die ermittelte Bewegungsrichtung zu wählen.

9. Selektive Haustiertür nach Anspruch 8, die einen Tunnelabschnitt umfasst, der einen Tunnel für einen Eintritt/Austritt des Haustiers (9) definiert, wobei der Näherungsfühler (7, 12, 28) auf einer Seite des Tunnels ein System umfasst, um einen Lichtstrahl (8) zu erzeugen und abzutasten, der auf einer gegenüberliegenden Seite des Tunnels reflektiert wird.

10. Selektive Haustiertür nach einem der Ansprüche 1 bis 9, wobei das elektronische Steuerungssystem ein Vielzahl von Lernmodi aufweist, um Berechtigungsdaten für ein Haustier (9), das durch das RFID-Lesegerät (11) identifiziert wird, zu lernen und in einem Speicher zu speichern, wobei die Berechtigungsdaten für jede von zwei Bewegungsrichtungen durch die Haustiertür definieren, ob einem identifizierten Haustier (9) erlaubt wird, die Haustiertür zu durchqueren.

11. Selektive Haustiertür nach Anspruch 10, wobei die Lernmodi einen "Eintritts- und Austritts-" Lernmodus, in dem die Haustiertür Berechtigungsdaten lernt und speichert, die definieren, ob einem identifizierten Haustier (9) erlaubt wird, die Haustiertür in jeder von zwei entgegengesetzten Bewegungsrichtungen zu durchqueren, und einen "Eintritts- und Austritts-" Lernmodus umfassen, in dem die Haustiertür Berechtigungsdaten lernt und speichert, die definieren, ob einem identifizierten Haustier (9) erlaubt wird, die Haustiertür in nur einer einzelnen Bewegungsrichtung zu durchqueren.

12. Selektive Haustiertür nach einem der Ansprüche 1 bis 11, wobei das elektronische Steuerungssystem programmierbar ist, um für jedes einer Vielzahl von unterschiedlich identifizierten Haustieren (9) und für jede von zwei Bewegungsrichtungen durch die Haustiertür zu definieren, ob einem identifizierten Haustier (9) erlaubt wird, die Haustiertür zu durchqueren.

13. Selektive Haustiertür nach einem vorhergehenden Anspruch, die einen Tunnelabschnitt umfasst, der einen Tunnel zum Eintritt/Austritt des Haustiers (9) definiert, wobei der Tunnelabschnitt eine Ausbildung mit einer geraden oder konkaven Fläche aufweist, die eine Abwärtsstufe (22) zu einem Bereich von erhöhter Bodentiefe des Tunnels neben der mindestens einen beweglichen Klappe (2, 4, 26) definiert, und wobei die bewegliche Klappe (2, 4, 26) über die abwärts gerichtete Stufe (22) schwenkt.

14. Selektive Haustiertür nach einem vorhergehenden Anspruch, die einen Tunnelabschnitt umfasst, der einen Tunnel zum Eintritt/Austritt des Haustiers (9), erste und zweite bewegliche Klappen (2, 4, 26), eine in Richtung beider Enden des Tunnels, und erste und zweite steuerbare Schlösser (3, 5, 29), jedes für eine jeweilige der Klappen (2, 4, 26) definiert, wobei das erste steuerbare Schloss (3, 5, 29) steuerbar ist, um ein Öffnen der ersten Klappe (2, 4, 26) selektiv zu ermöglichen und zu verhindern, und wobei das zweite steuerbare Schloss (3, 5, 29) steuerbar ist, um ein Öffnen der zweiten Klappe (2, 4, 26) selektiv zu ermöglichen und zu verhindern.

15. Verfahren zum Programmieren einer selektiven Haustiertür, die zum selektiven Steuern eines Haustier-Eintritts und -Austritts in das und aus dem Gebäude in ein Gebäude eingebaut wird, wobei die selektive Haustiertür einen Tunnel einschließlich einer beweglichen Klappe oder einer beweglichen Klappe an beiden Enden und ein oder mehrere steuerbare Schlösser (3, 5, 29) für die oder jede Klappe umfasst, um ein Öffnen der Klappe und einen Austritt aus dem Tunnel durch ein Haustier (9) zu verhindern, wobei die Haustiertür des Weiteren ein Kennungslesegerät (11) umfasst, um eine Kennung (10) von einem Haustier (9) zu lesen, die das Haustier (9) identifiziert, und um das eine oder die mehreren Schlösser (3, 5, 29) als Reaktion auf ein Steuern einer Bewegung eines Haustiers (9) durch die Haustiertür zu steuern, wobei das Verfahren umfasst:
ein Bereitstellen einer Vielzahl von Lernmodi für die Haustiertür, wobei die Lernmodi definieren, ob einem identifizierten Haustier (9) erlaubt wird, aus dem Gebäude herauszukommen und hineinzukommen;
ein Bereitstellen einer oder mehrerer Benutzersteuerungen, um einem Benutzer zu ermöglichen, den ausgewählten Lernmodus zu aktivieren;
ein Aktivieren des ausgewählten Lernmodus als Reaktion auf einen Benutzer; und
ein Verwenden eines gekennzeichneten Haustiers (9), um die Haustiertür in dem ausgewählten Lernmodus zu programmieren,
wobei die Lernmodi einen Eintritts- und Austrittsmodus, in dem die Haustiertür in der Lage ist zu lernen, dass ein identifiziertes Haustier (9) fähig ist, sowohl in das Gebäude hineinzukommen als auch herauszukommen, und einen Eintrittseinzelmodus umfassen, in dem die Haustiertür in der Lage ist zu lernen, dass ein identifiziertes Haustier (9) fähig ist, in das Gebäude nur hineinzukommen.

## Revendications

1. Porte sélective pour animal de compagnie avec un mode sécurité, dans laquelle la porte pour animal de compagnie est configurable afin de permettre à un animal de compagnie (9) d'entrer mais pas de sortir d'un bâtiment, la porte pour animal de compagnie comprenant au moins un volet mobile (2, 4, 26), une serrure contrôlable (3, 5, 29) pour le volet (2, 4, 26), et un lecteur d'étiquettes (11) permettant de lire une étiquette (10) sur un animal de compagnie (9) identifiant l'animal de compagnie et permettant de contrôler ladite serrure contrôlable (3, 5, 29) en réponse, en vue de contrôler le mouvement d'un animal de compagnie (9) à travers la porte pour animal de compagnie ;
dans laquelle ladite au moins une serrure contrôlable (3, 5, 29) et ledit au moins un volet mobile (2, 4, 26) sont, en combinaison, contrôlables afin de limiter le mouvement d'un animal de compagnie (9) à travers ladite porte pour animal de compagnie dans chacune des deux directions opposées, et dans laquelle la porte pour animal de compagnie comprend en outre :
un magasin de données configuré afin de stocker des données de permission définissant, pour chacun d'une pluralité d'animaux domestiques identifiés (9), un mode d'utilisation autorisé dudit volet pour animal de compagnie ; et
un système de commande électronique raccordé audit lecteur d'étiquettes (11) et à ladite au moins une serrure contrôlable (3, 5, 29) afin de contrôler un mouvement d'un animal de compagnie identifié (9) à travers ladite porte pour animal de compagnie en réponse au mode d'utilisation autorisée de la porte pour animal de compagnie pour l'animal de compagnie identifié défini par lesdites données de permission stockées ; et
dans laquelle lesdits modes d'utilisation de ladite porte pour animal de compagnie incluent au moins un mode d'entrée/sortie dans lequel un animal de compagnie identifié (9) est capable à la fois d'entrer et de sortir du bâtiment, et un mode de sécurité dans lequel l'animal de compagnie identifié (9) est seulement capable d'entrer dans le bâtiment.

2. Porte sélective pour animal de compagnie selon la revendication 1, dans laquelle ledit système de commande électronique est programmable afin de définir un mode d'utilisation autorisé pour chaque animal de compagnie identifié (9).

3. Porte sélective pour animal de compagnie selon la revendication 2, dans laquelle ledit système de commande électronique est programmable en utilisant ledit animal de compagnie identifié (9).

4. Porte sélective pour animal de compagnie selon l'une quelconque des revendications 1 à 3, comprenant en outre une antenne en boucle (6, 27) pour ledit lecteur d'étiquettes (11) et une portion en forme de tunnel définissant un tunnel pour l'entrée/la sortie dudit animal de compagnie (9), dans laquelle ladite antenne en boucle (6, 27) comprend ledit tunnel, dans laquelle ledit volet mobile (2, 4, 26) est situé dans ledit tunnel, et dans laquelle ladite antenne en boucle (6, 27) est divisée de telle manière qu'une première et une seconde portion de ladite antenne en boucle (6, 27) soient disposées de chaque côté dudit volet mobile (2, 4, 26).

5. Porte sélective pour animal de compagnie selon la revendication 4, dans laquelle ledit volet (2, 4, 26) est placé de manière asymétrique dans ledit tunnel de sorte que le tunnel s'étende davantage d'un côté dudit volet (2, 4, 26) par rapport à l'autre, et dans laquelle une première section de ladite antenne en boucle (6, 27) sur un côté court dudit tunnel présente davantage de tours qu'une seconde section de ladite antenne en boucle (6, 27) sur un côté plus long dudit tunnel.

6. Porte sélective pour animal de compagnie selon la revendication 4 ou 5, dans laquelle lesdites première et seconde sections de ladite antenne en boucle sont électriquement raccordées ensemble, en particulier raccordées en série l'une avec l'autre.

7. Porte sélective pour animal de compagnie selon l'une quelconque des revendications précédentes, comprenant deux serrures contrôlables (3, 5, 29), l'une de chaque côté dudit au moins un volet mobile (2, 4, 26).

8. Porte sélective pour animal de compagnie selon l'une quelconque des revendications précédentes, comprenant en outre au moins un détecteur de proximité (7, 12, 13, 14, 15, 16, 17, 28) afin de détecter une tentative d'entrée d'un animal de compagnie (9) dans ladite porte pour animal de compagnie, et dans laquelle ledit système de commande électronique est sensible à un signal provenant dudit détecteur de proximité afin de contrôler ladite porte pour animal domestique,
la porte sélective pour animal de compagnie comprenant de préférence une portion en forme de tunnel définissant un tunnel pour l'entrée/la sortie dudit animal de compagnie (9) et deux desdits détecteurs de proximité (7, 12, 13, 14, 15, 16, 17, 28), l'un vers chaque extrémité dudit tunnel ; et dans laquelle ledit système de commande électronique est sensible à un signal provenant desdits détecteurs de proximité (7, 12, 13, 14, 15, 16, 17, 28) afin de déterminer un mouvement de direction d'un animal de compagnie (9) à travers la porte pour animal de compagnie, et de contrôler ladite au moins une serrure contrôlable (3, 5, 29) en réponse à ladite direction de mouvement déterminée,
de préférence, dans laquelle ledit système de commande électronique stocke deux ensembles de données de permission définissant les directions de mouvement autorisées d'un animal de compagnie à travers ladite porte pour animal de compagnie, un premier ensemble de données de permission comprenant des données de permission pour un ou plusieurs animal/animaux de compagnie identifié(s) (9) et définissant un premier ensemble d'une ou plusieurs direction(s) autorisée(s)/interdite(s) de mouvement de l'animal de compagnie identifié (9) à travers ladite porte pour animal de compagnie, et un second ensemble de données de permission comprenant des données de permission pour un ou plusieurs animal/animaux de compagnie identifié(s) (9) et définissant un second ensemble d'une ou plusieurs direction(s) de mouvement autorisée(s)/interdite(s) de l'animal de compagnie identifié (9) à travers ladite porte pour animal de compagnie et dans laquelle ledit système de commande électronique est configuré afin de sélectionner un desdits ensembles de données de permission à utiliser dans le contrôle d'un mouvement d'un animal de compagnie identifié (9) à travers ladite porte pour animal de compagnie en réponse à ladite direction de mouvement déterminée.

9. Porte sélective pour animal de compagnie selon la revendication 8, comprenant une portion en forme de tunnel définissant un tunnel pour l'entrée/la sortie dudit animal de compagnie (9), dans laquelle un détecteur de proximité (7, 12, 28) comprend, sur un côté dudit tunnel, un système permettant de permettant de générer et de détecter un faisceau de lumière (8) réfléchie sur un côté opposé du tunnel.

10. Porte sélective pour animal de compagnie selon l'une quelconque des revendications 1 à 9, dans laquelle ledit système de commande électronique présente une pluralité de modes d'apprentissage permettant d'apprendre et de stocker dans la mémoire, des données de permission pour un animal de compagnie (9) identifié par ledit lecteur RFID (11), dans laquelle lesdites données de permission définissent, pour chacune des deux directions de mouvement à travers la porte pour animal de compagnie, si un animal de compagnie identifié (9) est autorisé à passer à travers la porte pour animal de compagnie.

11. Porte sélective pour animal de compagnie selon la revendication 10, dans laquelle lesdits modes d'apprentissage comprennent un mode d'apprentissage «entrée et sortie » dans lequel la porte pour animal de compagnie apprend et stocke des données de permission définissant si un animal de compagnie identifié (9) est autorisé à passer dans chacune des deux directions de mouvement opposées à travers ladite porte pour animal de compagnie, et un mode d'apprentissage «entrée seulement » dans lequel la porte pour animal de compagnie apprend et stocke des données de permission définissant si un animal de compagnie identifié (9) est autorisé à passer dans une seule direction de mouvement à travers ladite porte pour animal de compagnie.

12. Porte sélective pour animal de compagnie selon l'une quelconque des revendications 1 à 11, dans laquelle ledit système de commande électronique est programmable, afin de définir, pour chacune d'une pluralité d'animaux de compagnie identifiés différemment (9) et pour chacune des deux directions de mouvement à travers la porte pour animal de compagnie, si un animal de compagnie identifié (9) est autorisé à passer à travers la porte pour animal de compagnie.

13. Porte sélective pour animal de compagnie selon l'une quelconque des revendications précédentes, comprenant une portion en forme de tunnel définissant un tunnel pour l'entrée/la sortie dudit animal de compagnie (9), dans laquelle ladite portion en forme de tunnel inclut une formation avec une surface droite ou concave définissant une marche vers le bas (22) vers une région présentant une profondeur de plancher accrue dudit tunnel adjacent audit au moins un volet mobile (2, 4, 26), et dans laquelle ledit volet mobile (2, 4, 26) oscille sur ladite marche vers le bas (22).

14. Porte sélective pour animal de compagnie selon l'une quelconque des revendications précédentes, comprenant une portion en forme de tunnel définissant un tunnel pour l'entrée/la sortie dudit animal de compagnie (9), des premier et second volets mobiles (2, 4, 26), l'un orienté vers chaque extrémité dudit tunnel, et de première et seconde serrure contrôlable (3, 5, 29) chacune pour un volet respectif (2, 4, 26), dans laquelle ladite première serrure contrôlable (3, 5, 29) est contrôlable afin d'activer et d'inhiber sélectivement l'ouverture dudit premier volet (2, 4, 26), et dans laquelle ladite seconde serrure contrôlable (3, 5, 29) est contrôlable afin d'activer et d'inhiber sélectivement l'ouverture dudit second volet (2, 4, 26).

15. Procédé de programmation d'une porte sélective pour animal de compagnie installée dans un bâtiment, pour le contrôle sélectif de l'entrée et de la sortie d'un animal de compagnie dans et hors du bâtiment, la porte sélective pour animal de compagnie comprenant un tunnel incluant un volet mobile ou un volet mobile à chaque extrémité, et une ou plusieurs serrure(s) contrôlable(s) (3, 5, 29) pour le ou pour chaque volet, afin d'inhiber l'ouverture du volet et la sortie du tunnel par un animal de compagnie (9), la porte pour animal de compagnie comprenant en outre un lecteur d'étiquette (11), permettant de lire une étiquette (10) sur un animal de compagnie (9), identifiant ledit animal de compagnie (9), et permettant de contrôler lesdites une ou plusieurs serrure(s) (3, 5, 29) en réponse afin de contrôler le mouvement d'un animal de compagnie (9) à travers la porte pour animal de compagnie, le procédé comprenant :
la fourniture d'une pluralité de modes d'apprentissage pour ladite porte pour animal de compagnie, lesdits modes d'apprentissage définissant si un animal de compagnie identifié (9) est autorisé à sortir et à entrer dans le bâtiment ;
la fourniture d'une ou plusieurs commande(s) utilisateur afin de permettre à un utilisateur d'activer un desdits modes d'apprentissage sélectionnés ;
l'activation d'un mode d'apprentissage sélectionné en réponse à un utilisateur ; et
l'utilisation d'un animal de compagnie étiqueté (9) afin de programmer la porte pour animal de compagnie dans ledit mode d'apprentissage sélectionné, dans laquelle lesdits modes d'apprentissage comprennent un mode entrée et sortie dans lequel la porte pour animal de compagnie est capable d'apprendre qu'un animal de compagnie identifié (9) est en mesure d'entrer et de sortie du bâtiment, et un mode entrée uniquement dans lequel la porte pour animal domestique est capable d'apprendre qu'un animal domestique identifié (9) est en mesure d'entrer uniquement dans le bâtiment.
